# EUROPÄISCHE PATENTSCHRIFT

(11) **EP 3 473 228 B1**
(45) Veröffentlichungstag und Bekanntmachung des Hinweises auf die Patenterteilung: **09.06.2021**
(21) Anmeldenummer: 18196144.2
(22) Anmeldetag: 24.09.2018
(51) Int. Cl.: A61G 7/05, F16B 12/60, A47C 21/08, A47C 19/02

(54) **BETT MIT ANBAUTEIL**
BED WITH CONNECTION PART
LIT DOTÉ D'UNE PIÈCE RAPPORTÉE

(30) Priorität: 17.10.2017 DE 102017124172
(43) Veröffentlichungstag der Anmeldung: 24.04.2019
(73) Patentinhaber: Stiegelmeyer GmbH & Co. KG, 32051 Herford (DE)
(72) Erfinder: Danneberg, David, 33649 Bielefeld (DE)
(74) Vertreter: Schön, Christoph

(56) Entgegenhaltungen:
- JP-A- H03 182 208
- US-A- 2 261 820
- US-A1- 2001 011 393

## Beschreibung

Die vorliegende Erfindung betrifft ein Bett mit einem Anbauteil und ein Verfahren zur Befestigung eines Anbauteils an einem Bett.

Betten werden in Fabriken gefertigt und anschließend zum Kunden verbracht. Dabei ist es üblich, das Bett (teil-)zerlegt zu liefern, so dass der Kunde oder ein Servicemitarbeiter für die Endmontage verantwortlich ist. Da hierfür möglichst wenig Zeit verwendet werden soll, sind häufig die Betten in größeren Einheiten/Modulen vormontiert, so dass üblicherweise größere Einheiten/Module miteinander verbunden werden müssen. Zudem ist es in anderen Ausführungsformen auch üblich, in der Endmontage vorort die Seitensicherungen, wie auch Blenden und Kopf- und Fußteile mit Verschraubungen an dem Bett zu verbinden. Der erste Fall ist nachteilig, da relativ große und schwere Baugruppen transportiert werden müssen und zusätzlich ist die logistische Flexibilität eingeschränkt, da es einen deutlich erhöhten Aufwand bedeutet, unterschiedliche Varianten bereitzustellen. So müssen in diesem Fall Seitenelemente mit und ohne Seitensicherungen bevorratet werden. Diese Bevorratung kann werkseitig und/oder kundenseitig sein. Der zweite Fall ist nachteilig, da ein zeitlich großer Aufwand des Verschraubens nötig ist. Zudem birgt die Schraubverbindung das Risiko, eine zu große oder zu kleine Anzugskraft zu erfahren. Dies kann zum einen zu einem Lösen der Verbindung und zum anderen zu gestauchten bzw. gequetschten Bauteilen führen. Beispielhafte Verbindungsvorrichtungen für Bettanbauteile sind in den Dokumenten US 2001/011393 A1 und JP H03 182208 A gezeigt.

Entsprechend ist es die Aufgabe der vorliegenden Erfindung, ein neues Bett bereitzustellen, das einfach, schnell und reproduzierbar montierbar ist. Ebenso ist es die Aufgabe, dass es schnell zerlegbar sein soll. Dies ist gerade im Krankenhaus und Pflegebereich notwendig, wo nicht benötigte Betten schnell und platzsparend verstaut werden müssen.

Diese Aufgabe wird durch die Merkmale der unabhängigen Ansprüche gelöst. Bevorzugte Weiterbildungen sind Gegenstand der abhängigen Ansprüche.

Ein Bett umfasst ein seitlich am Bett lösbar angebrachtes Anbauteil, wie insbesondere eine Seitensicherung, wobei für das Anbauteil zwei Verbindungsteile zur Verbindung mit dem Rahmen des Betts vorgesehen sind. Jedes der Verbindungsteile weist zumindest zwei hakenförmige Eingriffsabschnitte für einen Eingriff und/oder ein Umgreifen des Rahmens des Betts auf. Bevorzugt sind die Verbindungsteile mit dem Anbauteil verbunden. So muss an dem Bettrahmen kein gesondertes Teil angebracht bzw. angeschraubt werden. Stattdessen genügt es, wenn an dem Bett, bzw. am Rahmen des Betts Öffnungen vorgesehen sind, mit denen die hakenförmigen Verbindungselemente in Eingriff treten können. So sind am Bett(-rahmen) keine vorstehenden Teile angebracht, von denen eine Verletzungsgefahr ausgehen könnte. Zudem ist die Montage sehr einfach. Die hakenförmigen Eingriffselemente haben erfindungsgemäß einen Versatz in vertikaler Richtung und liegen insbesondere übereinander, wobei auch ein Versatz in Bettquerrichtung erfindungsgemäß vorgesehen ist. Durch diese (zumindest) zwei hakenförmigen Eingriffselemente werden automatisch zwei beabstandete Haltepunkte definiert, was bedeutet, dass hierüber ein Biegemoment aufgenommen werden kann, wenn eine Biegekraft am oberen Ende der Seitensicherung (wenn sie in der sichernden Position ist) in Bettquerrichtung ausgeübt wird. Gerade diese Richtung ist die benötigte Sicherungsrichtung und so ist eine Steifigkeit der Haltevorrichtung in dieser Richtung besonders wichtig. Anstelle von den oben genannten zwei Öffnungen kann eines der hakenförmigen Verbindungselemente alternativ auch so ausgestaltet sein, dass es die Dicke des Bettrahmens in Bettquerrichtung im Bereich der Verhakung komplett umgreift. An den Seiten des Betts, wie auch an den Häuptern des Betts kann ein entsprechendes Anbauteil angebracht werden. Alternativ und äquivalent zu der Verbindung zum Rahmen des Betts kann eine Verbindung zu einem Matratzenträger bestehen. Ein Matratzenträger ist insbesondere eine mit einem Rahmen versehene Struktur, die dazu dient eine Matratze zu tragen.

Erfindungsgemäß ist für das Verbindungsteil eine offenbare Halterung vorgesehen, die in einem geschlossenen Zustand eingerichtet ist, um eine Entfernung des Anbauteils vom Bettrahmen zu verhindern. Dies kann insbesondere durch eine Einrastung geschehen. Das Anbauteil kann auch eine Seitenblende sein, die bei Verschleiß oder beim Wunsch eines anderen Designs ausgetauscht werden kann. Die öffenbare Halterung ist insbesondere dauerhaft und/oder unentfernbar mit dem Verbindungsteil verbunden. Hierdurch wird eine Sicherung des Anbauteils insbesondere entgegen der Schwerkraftrichtung bewirkt.

Erfindungsgemäß sind zudem im Rahmen des Betts Freimachungen für die Eingriffselemente vorgesehen und die Eingriffselemente weisen einen vertikalen Versatz auf.

Insbesondere umfasst die Halterung einen Fingereingriffsbereich, um so ein Öffnen und Schließen der Halterung zu ermöglichen, wobei insbesondere dieses Öffnen und Schließen ohne den Einsatz eines Werkzeugs möglich ist. So ist für den Monteur eine einfache und zeitsparende Endmontage gewährleistet. Dies gilt auch für das Zerlegen und Wiederzusammenbauen im Krankenhaus oder Pflegeheim um Betten platzsparend speichern zu können.

Bevorzugt ist für die Halterung ein Klemmhebel oder ein Schieber vorgesehen, für den konstruktiv eine Endlage definiert ist, wobei in der Endlage ein Kontakt zu einer Anschlagfläche besteht. Man kann sich im Gegensatz dazu, Verschraubungen zur Halterung vorstellen, diese Verschraubungen wirken mit einer Verschraubkraft, die von der Hand aufgebracht werden muss und die Endlage wird im Gegensatz zum Anschlag durch die Erreichung einer Verschraubungskraft definiert. Für eine gute Dauerfestigkeit der Verschraubung ist eine vordefinierte Verschraubungskraft notwendig, was dafür sorgt, dass eigentlich ein Festziehdrehmoment eingehalten werden müsste. Dies ist aber im betrieblichen Alltag der Montage kaum einzuhalten. Deshalb bietet die Endlage den Vorteil, dass die Soll-Halteposition der Halterung einfach eingestellt und überprüft werden kann.

Bevorzugt weist das Verbindungsteil bei zumindest einem der hakenförmigen Eingriffsabschnitte einen Spalt auf, der in einem mittleren Bereich der Materialstärke des Bettrahmens entspricht und in dem ein Abschnitt des Bettrahmens aufgenommen ist. Der Spalt kann insbesondere keilförmig sein. In anderen Worten: In bspw. der Mitte des Spalts in Fügerichtung entspricht die Spaltbreite der Materialstärke des Bettrahmens. Alternativ kann er parallele Innenseiten aufweisen. Zusätzlich umfasst diese Formulierung, dass insbesondere in dem Fall, dass der Bettrahmen durch ein Rechteckprofil gebildet wird, der Spalt so breit sein kann, wie die Breite des (Rechteck-)Profils im Außenmaß. Es kann der keilförmige Spalt bevorzugt nur in einem hakenförmigen Eingriffselement vorgesehen sein und dieses hakenförmige Eingriffselement kann dann insbesondere so eingerichtet sein, um die Gewichtskräfte des Anbauteils an den Rahmen des Betts abzuleiten. Die auf das Anbauteil wirkende Schwerkraft drückt bevorzugt den genannten Abschnitt des Bettrahmens in den keilförmigen Spalt.

Insbesondere ist es vorteilhaft, wenn das Verbindungsteil keine Schrauben zur Verbindung mit dem Rahmen des Betts umfasst und/oder zur Befestigung des Verbindungsteils am Bett benötigt werden. Alternativ und/oder zusätzlich wird bevorzugt keine Schraube vorgesehen, die mit einer Spannkraft die Halterung (also insbesondere den Klemmhebel oder Schieber) in seiner Position hält, da eine Schraube unter Verwendung von Spannkräften arbeitet, die abhängig sind von der Kraft des Anwenders und somit nicht reproduzierbar. Insbesondere kann bei einer Schraube nämlich der Fall auftreten, dass die Schraube zu locker sitzt oder zu fest angezogen wird, so dass ein Schaden am Bett auftreten kann.

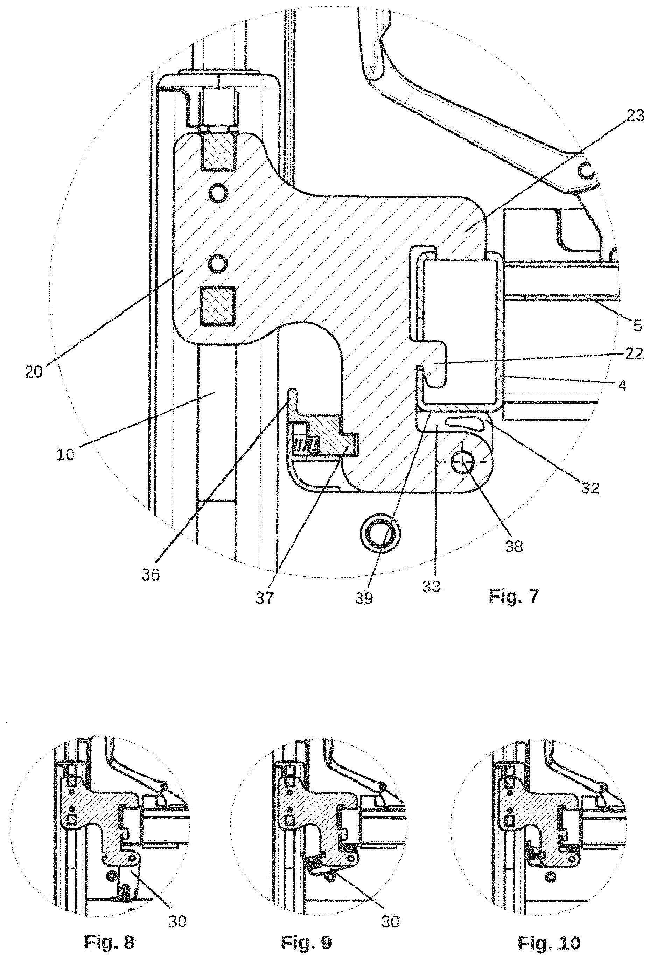

Auch kann unterstützend ein elastisch vorspannbares Mittel vorgesehen sein, um die Halterung in den geschlossenen Zustand zu bewegen und/oder in dem geschlossenen Zustand zu halten. Dabei kann ein geöffneter Zustand der Halterung definiert sein, bei der das Anbauteil vom Bett entnehmbar ist und insbesondere das Verbindungsteil vom Rahmen entnehmbar ist und sobald das Anbauteil befestigt ist, kann für das Schließen des Halteteils, optional zunächst ein erster Wegabschnitt, definiert werden, bei dem praktisch keine Schließkräfte wirken. In einem zweiten Wegabschnitt wirkt bevorzugt bei den meisten Ausführungsformen dieser Erfindung eine Kraft auf die Halterung, die entgegen deren Schließrichtung wirkt und dabei eine Kraft auf die hakenförmige Eingriffsabschnitte in verbindende Richtung bewirkt. Optional und nicht zwingend nötig, kann nach einem Höhepunkt dieser Schließkraft ein dritter Wegabschnitt folgen, bei dem eine Kraft in die Schießrichtung wirkt. Diese Schließkraft kann mit dem Erreichen der Schießposition auf einen kleinen Wert zurückgehen oder Null erreichen. Dies ist der Fall, wenn in einem bevorzugten Ausführungsbeispiel ein federelastisches Mittel 32 der Fig. 7 verwendet wird. Alternativ kann die federelastische Kraft, die die Rastverbindung schließt einen Maximalwert erreichen, wenn die Schießposition erreicht ist. Dies wäre dann der Fall, wenn die federelastischen Mittel 32 abweichend von Fig. 7 dort angebracht wären, wo das Bezugszeichen 39 ist.

Insbesondere kann das Bett zumindest ein Betthaupt und bevorzugt an jedem Längsende ein Betthaupt umfassen und das Betthaupt kann mit einem lösbaren Verbindungsteil versehen sein, das zumindest zwei hakenförmige Eingriffsabschnitte für einen Eingriff in den Bettrahmen aufweist. Zudem kann bevorzugt eine öffenbare Halterung vorgesehen sein, die in einem geschlossenen Zustand eingerichtet ist, um eine Entfernung des Haupts vom Bettrahmen zu verhindern. Dieses Verbindungsteil kann bevorzugt funktional identisch zu den Verbindungsteilen der seitlichen Anbauteile sein, um die Bedienung zu vereinfachen.

Vorteilhaft ist ferner, wenn für das Anbauteil ein Verbindungsteil mit dreifacher Sicherung vorgesehen ist, wobei in der ersten Sicherung das Anbauteil durch Schwerkrafteinflüsse am Bett befestigbar ist. In der zweiten Sicherung ist insbesondere durch ein Verbindungsteil eine formschlüssige Verbindung vorgesehen, die eine Entfernung des Anbauteils entgegen der Schwerkraftrichtung behindert. Und in der dritten Sicherung ist eine Sicherung der zweiten Sicherung vorgesehen und insbesondere die dritte Sicherung umfasst eine kraft- und/oder formschlüssige Verbindung. Der Bezug auf die Schwerkraftrichtung umfasst insbesondere, dass zumindest ein Bewegungsanteil (vektoriell) in dieser Richtung gegeben ist. Bevorzugt kann die dritte Sicherung eine kraftschlüssige, wie auch formschlüssige Verbindung umfassen. Der kraftschlüssige Anteil kann bspw. durch Reibkräfte erzielt werden, die gegen ein Öffnen oder Entfernen des Verbindungsteils wirken.

In einem Verfahren zur Befestigung eines Anbauteils an einem Bett wird das Anbauteil unter Verwendung von der Schwerkraft an einem Rahmen des Betts eingehängt und wird mit einer manuell betätigbaren Halterung an dem Bett befestigt.

Nachfolgend wird die Erfindung anhand bevorzugter Ausführungsformen beispielhaft erläutert. Es zeigen:
- Fig. 1: eine perspektivische Ansicht eines Bettes mit einer Seitensicherung in einer Explosionsansicht,
- Fig. 2: das Detail A der Fig. 1 mit einer Darstellung eines Verbindungsteils,
- Fig. 3: eine Variante des in Fig. 2 gezeigten Verbindungsteils,
- Fig. 4: die Möglichkeit der Montage eines Haupts mit einem Verbindungsteil,
- Fig. 5: das Verbindungsteil in einer perspektivischen Explosionsansicht,
- Fig. 6: einen Schnitt durch ein Verbindungsteil in einer alternativen Ausführungsform,
- Fig. 7: einen Schnitt durch das in den Fig. 1, 2 und 5 gezeigten Verbindungsteils im Zustand der Montage an dem Rahmen eines Betts und
- Fig. 8 bis 10: unterschiedliche Zustände während der Montage des Verbindungsteils an das Bett.

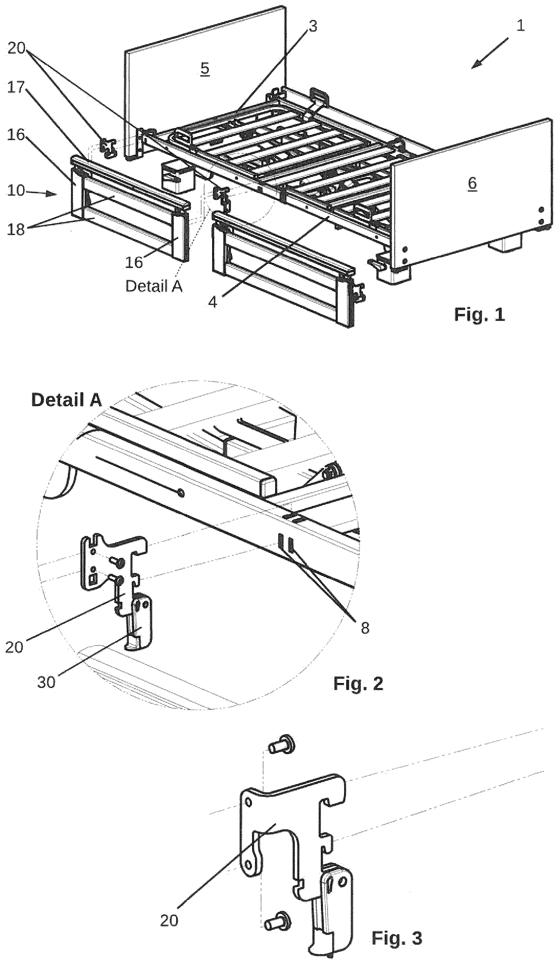

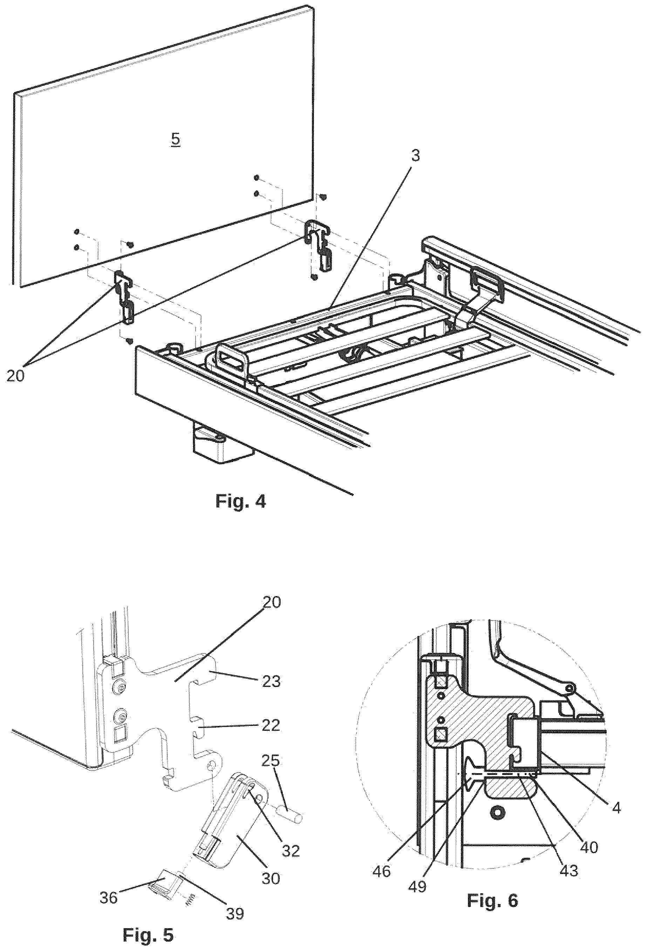

Fig. 1 zeigt ein übliches Bett, welches einen Bettrahmen 3, 4 umfasst. Am Rahmen 3, 4 sind unterschiedliche Elemente eines Matratzenträgers befestigt und teilweise gegenüber dem Rahmen verstellbar. So sind bspw. eine Rückenlehne oder ein Fußteil anstellbar. Zudem sind pro Bettseite zwei Seitensicherungen 10 gezeigt, die jeweils etwa die Hälfte der Länge des Betts aufweisen, so dass sie in der Kombination die gesamte Bettlängsseite abdecken und so gegen ein Herausfallen einer im Bett befindlichen Person sichern können. Die Art der Befestigung der Seitensicherung 10 ist im Detail der Fig. 2 gezeigt. Hierfür kommt nämlich ein Verbindungsteil 20 zum Einsatz, wie es in Fig. 7 im Zustand des Anbaus an dem Bettrahmen 4 im Detail gezeigt ist. Das Verbindungsteil 20 kann als ein gelasertes Blechteil ausgeführt sein und an einem Ende einen Verbindungsbereich zur Verbindung mit der Seitensicherung 10 aufweisen. Diese Verbindung ist bevorzugt eine Schraubverbindung und die Seitensicherung 10 wird bevorzugt bereits werkseitig mit dem Verbindungsteil 20 versehen. Am anderen Ende des Verbindungsteils, das der Verbindung mit dem Rahmen 3, 4 des Betts dient, sind zwei hakenförmige Eingriffsabschnitte 22, 23 (siehe Fig. 5 und 7) vorgesehen. Im Rahmen des Betts sind (siehe Fig. 2) Freimachungen 8 vorgesehen, die in Eingriff mit den Eingriffsabschnitten 22, 23 bringbar sind. Fig. 2 zeigt zwei Paare der Freimachungen 8, um so die Verbindungsteile 20 zweier Seitensicherungen 10 in der Bettmitte befestigen zu können.

Die Seitensicherung kann unterschiedlich aufgebaut sein. Bevorzugt umfasst sie zwei Pfosten 16 und relativ zu den Pfosten einen vertikal verschiebbar gelagerten Längsholmen 18. Die Pfosten können selbst vertikal verschiebbar gelagert sein oder ein oberes Ende umfassen, das umklappbar oder entfernbar ist. Zudem kann optional eine obere Handreling 17 zum Einsatz kommen, die die Gesamthöhe der Seitensicherung weiter erhöht.

Die Eingriffsabschnitte 22, 23 weisen einen im Wesentlichen horizontalen Abschnitt und einen davon nach unten abgewinkelten zweiten, im Wesentlichen vertikalen Abschnitt auf. Die hakenförmigen Eingriffsabschnitte 22, 23 greifen in das Material des Rahmens 3, 4 des Betts ein oder durch es hindurch. Dabei haben sie einen Abstand voneinander, der möglichst groß gewählt ist, um so die Steifigkeit der Verbindung zu erhöhen. So greift bspw. ein nach unten gerichteter Abschnitt des Eingriffsabschnitts 23 von oben in eine oben liegende Öffnung des Rahmens 4. Und in der unteren Hälfte, bevorzugt in dem unteren Drittel der vertikal ausgerichteten Wand des Rahmens 4, der insbesondere ein Rechteckprofil ist, greift bevorzugt von außen der andere Eingriffsabschnitt 22 ein. Dabei hat der Haken einen vertikal ausgerichteten und keilförmigen Schlitz, dessen Breite an der untenliegenden Öffnung des Schlitzes breiter (bevorzugt mindestens dem 1,5 fachen) der Wandstärke des Bettrahmens 4 entspricht. An dem anderen Ende des Schlitzes, nämlich dem obenliegenden Ende, ist der Schlitz enger als die Wandstärke des Materials des Rahmens. Die Breite und Lage des Schlitzes ist so dimensioniert, dass ein Abschnitt des Rahmens 3, 4 in dem Schlitz eingepresst wird. Das Verbindungsteil 20 liegt insbesondere nicht auf der gesamten gelaserten Schnittfläche der Öffnung 8 auf. Vielmehr werden die Gewichtskräfte über Kontaktpunkte (bevorzugt zwei) übertragen, wobei die Kontaktpunkte sich an den Kanten der gelaserten Öffnungen des Rahmens 3, 4 ergeben können. Die Kräfte, die das vorstehend genannte Pressen bewirken, sind zunächst die Gewichtskräfte des Anbauteils. Zudem sind dies federelastische Kräfte eines nachfolgend erläuterten federelastisch wirkenden Mittels 32. Zudem oder alternativ kann eine Halterung 30, oder insbesondere ein Hebel 30, entsprechend gerichtete Kräfte bewirken. Diese Kräfte bewirken hohe Kontaktkräfte im beschriebenen Schlitz. Diese Kräfte führen dazu, dass eine elastische und/oder plastische Verformung einer Pulverbeschichtung (sofern vorhanden) und/oder Lackierung (sofern vorhanden) und/oder des Materials des Verbindungsteils und/oder des Materials des Rahmens 3, 4 stattfindet. Hierdurch wird eine spielfreie Verbindung geschaffen. Zudem oder alternativ kann die vorstehend beschriebene Verbindung derart spielfrei ausgeführt sein, dass an dem Haken 23 eine keilartige Erweiterung vorgesehen ist. Das untere Ende des Hakens 23 ist also leicht trapezförmig. Die vorstehend genannten spielfreien Verbindungen sind insbesondere spielfrei gegenüber einem Drehmoment um eine Achse in Bettlängsrichtung. Dies bedeutet, dass, wenn man bei einer Seitensicherung in der sichernden Stellung an das obere Ende der Seitensicherung, also an der Handreling 17, in Bettquerrichtung drückt, kaum eine Verformung erhält. Dies bewirkt bei dem Anwender den Eindruck einer wertigen Verarbeitung.

In einem Drehpunkt 38 (siehe Fig. 7) des Verbindungsteils 20 ist ein Lagerstift 25 (siehe Fig. 5) gelagert, der seinerseits gegenüber einer Halterung bzw. einem Hebel 30 (siehe Fig. 8) gelagert ist. Bspw. auf diese Weise ist der Hebel 30 gegenüber dem Verbindungsteil 20 schwenkbar, wie dies in der Abfolge der Fig. 8 bis 10 gezeigt ist. So ist in Fig. 8 der Zustand gezeigt, wie bei der Montage die Eingriffsabschnitte 22, 23 in die Öffnungen 8 des Rahmens eingeführt sind. Dabei wird das Verbindungsteil insbesondere leicht um die Bettlängsrichtung geneigt in die Öffnungen 8 geschwenkt. Es kann horizontal in die Öffnungen 8 eingeschoben und anschließend vertikal in die Endposition abgelassen werden. In diesem Zustand ist der Hebel 30 in seiner geöffneten Stellung. Wenn der Hebel 30 durch den Anwender geschlossen wird, so erreicht er zunächst die in Fig. 9 gezeigte Stellung, bei der federelastische Mittel 32 maximal verformt sind. Bevorzugt können diese Mittel durch eine elastische Verformung des Hebels 30 realisiert werden. Der Hebel 30 ist bspw. aus einem schlagzähen Kunststoff, wie z.B. aus Polyamid oder POM gefertigt. Auch ein Hartgummi ist hierfür geeignet. Um eine hinreichende Verformbarkeit zu erzielen, ist eine Freimachung in den Hebel 30 eingeformt. Nach dem größten Widerstand gegen das Schließen des Hebels in die in Fig. 10 gezeigte Stelle, der bei ca. 45° liegt, nimmt der Widerstand ab und gegen Ende der Schließbewegung sorgt diese Verformung dafür, dass eine Kraft entsteht, die den Hebel in die geschlossene Position drückt. Insbesondere oder alternativ entsteht durch ein Verriegelungselement, das bevorzugt ein Hebel und/oder Riegel 40 und/oder Schieber sein kann, eine Kraft, die die hakenförmigen Elemente 22, 23 in eine jeweils dafür vorgesehene Rast der Verbindung mit dem Rahmen 4 drückt. Bei dem Schließen der Halterung 30, 40, das wie ein Verriegelungselement wirkt, bewegen sich zwei Teile unter Druckkraft relativ zueinander, was dazu führt, dass die Halterung auch aufgrund von Reibkräften in der geschlossenen Position verbleibt.

Zudem kann optional eine weitere Sicherung der Halterung 30 in der geschlossenen Position vorgesehen sein. Dies kann durch ein Handstück mit einem Handeingriffsbereich 36 erzielt werden, das in dieser Position einen Formschluss bewirkt. Konstruktiv kann der Formschluss über einen Riegel, Schieber oder Hebel bewirkt werden, der in eine entsprechende Rast, bevorzugt eine Rast an dem Verbindungsteil 20, alternativ bspw. an dem Anbauteil 10, eingreift. Beispielhaft zeigt Fig. 5 und 7 einen Betätiger mit einem Griffbereich 36 mit einem Vorsprung 37, der auf der Halterung 30 gelagert ist und mit einem Vorsprung 37 in eine Rast des Verbindungsteils eingreifen kann, so dass in der eingreifenden Position die Halterung 30 nicht aus der in Fig. 10 gezeigten geschlossenen Position aufgeklappt werden kann. In dieser Position steht die Halterung 30 bei einer Kontaktfläche 39 in Kontakt mit dem Rahmen 4. Diese Kontaktfläche ist eine Wegbegrenzung der Einstellbewegung der Halterung 30.

Dieser Anschlag hat den Vorteil, dass der Anwender nichts falsch machen kann. Bei anderen Mitteln der Befestigung, wie z.B. einer Verschraubung, kommt es nämlich auf die Schraubkraft an. Bei einer zu geringen Schraubkraft kann die Verschraubung sich unbeabsichtigt öffnen, was zu dem Ergebnis führt, dass viele Anwender, bzw. Servicetechniker, mit maximaler Kraft verschrauben, was zu Materialschädigungen, wie z.B. plastischen Verformungen am Rahmen führen kann. Der Anschlag 39 hingegen hat den Vorteil, dass hier eine Position erreicht wird, die für eine gute Befestigung des Anbauteils 10 steht. Bevorzugt kann die Halterung 30 so ausgeführt sein, dass in der geschlossenen Position der Halterung 30 eine Kraft auf die Verbindung des Verbindungsteils 20 mit dem Rahmen 4 wirkt, die so ausgerichtet ist, dass die Eingriffsabschnitte 22, 23 in ihre Lagerposition gezogen bzw. gedrückt werden. Alternativ kann die oben genannte weitere Sicherung der Halterung 30 in der geschlossenen Position durch einen Kraftschluss, also durch ein Druckspannelement, verursacht werden, wie bspw. ein Andruckteil, welches bspw. federelastisch angedrückt wird und über Reibkräfte die Halterung 30 in ihrer Sollposition hält.

Das Verbindungsteil 20 der Fig. 2 ist ein flaches Teil, welches stirnseitig an dem Anbauteil, insbesondere der Seitensicherung 10 befestigt wird. Folglich ist die Schraubrichtung der Befestigungsschrauben in Bettlängsrichtung. Im Gegensatz dazu ist in Fig. 3 eine Ausführungsform gezeigt, bei der das Verbindungsteil 20 abgewinkelt ist, so dass es von hinten gegen die Seitensicherung oder Seitenblende geschraubt werden kann. Diese abgewinkelte Variante kann bevorzugt auch für die Befestigung der Häupter 5, 6 des Betts verwendet werden. Das Verbindungsteil kann in dem Bereich der Verbindung mit dem Haupt flach sein und insbesondere senkrecht zu dem jeweiligen Pfosten 3, 4 ausgerichtet sein. So ergibt sich nur eine relativ geringflächige Kontaktzone dieser Teile mit einer relativ hohen Flächenpressung. Dies ist vorteilhaft, da so ggf. über eine elastische und/oder teilplastische Verformung des Verbindungsteils 20 und des Pfostens 3, 4, eine spielfreie Verbindung realisiert werden kann.

In Fig. 6 ist eine alternative Halterung für das Verbindungsteil 20 gezeigt. Hier ist ein Stift 40 in dem Verbindungsteil 20 verschiebbar gelagert und greift von unten unter den Rahmen 4 des Betts, dass das Verbindungsteil 20 nicht entfernt werden kann. Ein Anschlag 49 ist für die Bewegung vorgesehen. Somit hat der Anwender eine unmittelbare Rückmeldung, ob der Stift 40 in seiner Sollposition ist. In dieser Sollposition wird ein Formschluss 43 bewirkt. Aus Gründen der einfachen Darstellung ist in dieser Figur eine optionale Sicherung des Stifts 40 gegen ein komplettes Herausziehen nicht dargestellt. Zudem kann für den Stift 40 optional eine Feder vorgesehen sein, die den Stift stets in die gezeigte Lage drückt (oder zieht).

Alternativ kann der Stift auch in dem Rahmen 3, 4 gelagert sein und eine formschlüssige Rast gegenüber dem Verbindungsteil 20 oder dem Anbauteil 10 aufweisen.

## Patentansprüche

1. Bett (1) mit einem seitlich am Bett (1) lösbar angebrachten Anbauteil (10), wie insbesondere einer Seitensicherung (10), wobei für das Anbauteil (10) zwei Verbindungsteile (20) zur Verbindung mit dem Rahmen (3, 4) des Betts (1) vorgesehen sind, und jedes der Verbindungsteile (20) zumindest zwei hakenförmige Eingriffsabschnitte (22, 23) für einen Eingriff in den Rahmen (3, 4) und/oder ein Umgreifen des Rahmens (3, 4) aufweist,
und die hakenförmigen Eingriffsabschnitte (22, 23) einen Versatz in vertikaler Richtung und in Bettquerrichtung aufweisen und wobei für jedes der Verbindungsteile (20) eine öffenbare Halterung (30, 40) vorgesehen ist, die in einem geschlossenen Zustand eingerichtet ist, eine Entfernung des Anbauteils (10) vom Bettrahmen (3, 4) zu verhindern.

2. Bett (1) gemäß Anspruch 1, wobei die Halterung (30, 40) einen Fingereingriffsbereich (36, 46) umfasst, um so ein Öffnen und Schließen der Halterung (30, 40) zu ermöglichen, wobei insbesondere dieses Öffnen und Schließen ohne den Einsatz eines Werkzeugs möglich ist.

3. Bett (1) gemäß einem der Ansprüche 1 oder 2, wobei die Halterung (30, 40) einen Klemmhebel (30) oder einen Schieber (40) umfasst, für den konstruktiv eine Endlage vorgesehen ist, wobei in der Endlage ein Kontakt zu einer Anschlagfläche (39, 49) besteht.

4. Bett (1) gemäß einem der Ansprüche 2 oder 3, wobei das Verbindungsteil (20) bei zumindest einem der hakenförmigen Eingriffsabschnitte (22, 23) einen keilförmigen Spalt aufweist, der in einem mittleren Bereich der Materialstärke des Bettrahmens (3, 4) entspricht und in dem ein Abschnitt des Bettrahmens aufgenommen ist, und insbesondere nur in einem hakenförmigen Eingriffselement (22) der keilförmige Spalt vorgesehen ist und dieses hakenförmige Eingriffselement (22) eingerichtet ist, die Gewichtskräfte des Anbauteils (10) an den Rahmen (3, 4) des Betts abzuleiten.

5. Bett gemäß einem der Ansprüche 2 oder 3, wobei das Verbindungsteil (20) keine Schraube zur Verbindung mit dem Rahmen (3, 4) des Betts umfasst.

6. Bett gemäß einem der Ansprüche 2 oder 3, wobei ein elastisch vorspannbares Mittel (32) vorgesehen ist, um die Halterung (30, 40) in den geschlossenen Zustand zu bewegen und/oder in dem geschlossenen Zustand zu halten.

7. Bett gemäß einem der Ansprüche 2 oder 3, wobei das Bett (1) zumindest ein Betthaupt (5, 6) und bevorzugt an jedem Längsende ein Betthaupt (5, 6) umfasst und das Betthaupt (5, 6) mit einem lösbaren Verbindungsteil versehen ist, das zumindest zwei hakenförmige Eingriffsabschnitte für einen Eingriff in den Bettrahmen (3, 4) aufweist und insbesondere und eine öffenbare Halterung vorgesehen ist, die in einem geschlossenen Zustand eingerichtet ist, eine Entfernung des Haupts (5, 6) vom Bettrahmen (3 ,4) zu verhindern.

8. Bett gemäß einem der vorangegangenen Ansprüche, wobei für das Anbauteil (10) ein Verbindungsteil (20) mit dreifacher Sicherung vorgesehen ist, wobei in der ersten Sicherung das Anbauteil (10) durch Schwerkrafteinflüsse am Bett befestigbar ist, in der zweiten Sicherung eine formschlüssige Halterung (30) vorgesehen ist, die eine Entfernung des Anbauteils (10) entgegen der Schwerkraftrichtung behindert und in der dritten Sicherung eine Sicherung der zweiten Sicherung vorgesehen ist und insbesondere die dritte Sicherung eine kraft- (32) und/oder formschlüssige (33) Verbindung umfasst.

9. Verfahren zur Befestigung eines Anbauteils (10) an einem Bett (1), bei dem das Anbauteil (10) unter Verwendung von der Schwerkraft an einem Rahmen (3, 4) des Betts (1) eingehängt wird und mit einer manuell betätigbaren Halterung (30, 40) an dem Bett (1) befestigt wird, wobei für das Anbauteil (10) zwei Verbindungsteile (20) zur Verbindung mit dem Rahmen (3, 4) des Betts (1) vorgesehen sind und jedes der Verbindungsteile (20) zwei hakenförmige Eingriffsabschnitte (22, 23) für einen Eingriff und/oder ein Umgreifen des Rahmens (3, 4) aufweist, und die hakenförmigen Eingriffsabschnitte (22, 23) einen Versatz in vertikaler Richtung und in Bettquerrichtung J Z aufweisen und für jedes der Verbindungsteile (20) eine öffenbare Halterung (30, 40) vorgesehen ist, die in einem geschlossenen Zustand eine Entfernung des Anbauteils (10) vom Bettrahmen (3, 4) verhindert.

## Claims

1. Bed (1) with an attachment (10) detachably fastened laterally to the bed (1), such as in particular a guard (10), wherein the attachment (10) is provided with two connecting parts (20) to connect it to the frame (3, 4) of the bed (1), and each of the connecting parts (20) comprises at least two hook-shaped engagement sections (22, 23) for engaging with the frame (3, 4) and/or for wrapping around the frame (3, 4);
and the hook-shaped engagement sections (22, 23) are offset from each other in the vertical direction and in the transverse direction of the bed, and wherein, for each of the connecting parts (20), an openable retainer (30, 40) is provided, which, when in the closed state, is set up to prevent the attachment (10) from being removed from the bed frame (3, 4).

2. Bed (1) according to claim 1, wherein the retainer (30, 40) comprises a finger-engagement area (36, 46), to allow the retainer (30, 40) to be opened and closed, wherein in particular this opening and closing is possible without the use of a tool.

3. Bed (1) according to one of claims 1 or 2, wherein the retainer (30, 40) comprises a clamping lever (30) or a slide (40), for which an end position is structurally provided, wherein, in the end position, there is contact with a stop surface (39, 49).

4. Bed (1) according to one of claims 2 or 3, wherein the connecting part (20), in the case of at least one of the hook-shaped engagement sections (22, 23), comprises a wedge-shaped gap, the middle area of which corresponds to the thickness of the material of the bed frame (3, 4), and in which a section of the bed frame is accommodated, and in particular the wedge-shaped gap is provided only in one hook-shaped engagement element (22), and this hook-shaped engagement element (22) is set up to conduct the weight forces of the attachment (10) to the bed frame (3, 4) of the bed.

5. Bed according to one of claims 2 or 3, wherein the connecting part (20) does not comprise a screw for connection to the frame (3, 4) of the bed.

6. Bed according to one of claims 2 or 3, wherein an elastically pretensionable means (32) is provided to move the retainer (30, 40) into the closed state and/or to keep it in the closed state.

7. Bed according to one of claims 2 or 3, wherein the bed (1) comprises at least one headboard (5, 6), preferably a headboard (5, 6) at each longitudinal end, and the headboard (5, 6) is provided with a detachable connecting part, which comprises at least two hook-shaped engagement sections for engaging with the bed frame (3, 4), and in particular an openable retainer is provided, which, when in the closed state, is set up to prevent the headboard (5, 6) from being removed from the bed frame (3, 4).

8. Bed according to one of the preceding claims, wherein a connecting part (20) with three-fold safety is provided for the attachment (10), wherein, in the case of the first form of safety, the attachment (10) can be fastened to the bed by the force of gravity, in the case of the second safety, a positively-connecting retainer (30) is provided, which prevents the attachment (10) from being removed in the direction opposite to that of gravity, and, in the case of the third safety, a safety of the second safety is provided and in particular the third safety comprises a friction-locking (32) and/or a form-locking (33) connection.

9. Method for fastening an attachment (10) to a bed (1), in which the attachment (10) is hung by the use of gravity from a frame (3, 4) of the bed (1) and fastened to the bed (1) by means of a manually actuatable retainer (30, 40), wherein, for the attachment (10), two connecting parts (20) for connecting it to the frame (3, 4) of the bed (1) are provided, and each of the connecting parts (20) comprises two hook-shaped engagement sections (22, 23) for engaging with the frame (3, 4) and/or for wrapping around the frame (3, 4), and the hook-shaped engagement sections (22, 23) are offset from each other in the vertical direction and in the transverse direction of the bed, and, for each of the connecting parts (20), an openable retainer (30, 40) is provided, which, when in the closed state, prevents the attachment (10) from being removed from the bed frame (3, 4).

## Revendications

1. Lit (1) pourvu d'une pièce rapportée (10) montée de manière amovible, latéralement sur le lit (1), comme notamment une sécurité latérale (10), pour la pièce rapportée (10) étant prévues deux pièces d'assemblage (20), pour l'assemblage sur le cadre (3, 4) du lit (1), et chacune des pièces d'assemblage (20) comportant au moins deux segments d'engagement (22, 23) en forme de crochets destinés à s'engager dans le cadre (3, 4) et/ou à entourer le cadre (3, 4) et les segments d'engagement (22, 23) en forme de crochets présentant un décalage dans la direction verticale et dans la direction transversale du lit et pour chacune des pièces d'assemblage (20) étant prévu un support (30, 40) ouvrable, qui dans une position fermée est aménagé pour empêcher un retrait de la pièce rapportée (10) du cadre de lit (3, 4).

2. Lit (1) selon la revendication 1, le support (30, 40) comportant une zone d'engagement des doigts (36, 46), pour permettre ainsi une ouverture et une fermeture du support (30, 40), notamment ladite ouverture et fermeture étant possibles sans avoir recours à un outil.

3. Lit selon l'une quelconque des revendications 1 ou 2, le support (30, 40) comprenant un levier de serrage (30) ou un coulisseau (40) pour lequel est structurellement prévue une position extrême, dans la position extrême, un contact subsistant avec une surface de butée (39, 49).

4. Lit (1) selon l'une quelconque des revendications 2 ou 3, la pièce d'assemblage (20) comportant sur au moins l'un des segments d'engagement (22, 23) en forme de crochet une fente cunéiforme, qui dans une zone centrale, correspond à l'épaisseur de matière du cadre de lit (3, 4) et dans laquelle est réceptionné un segment du cadre de lit, et la fente cunéiforme n'étant prévue notamment que dans un élément d'engagement (22) en forme de crochet et ledit élément d'engagement (22) en forme de crochet étant aménagé pour évacuer les forces du poids de la pièce rapportée (10) exercées sur le cadre (3, 4) du lit.

5. Lit selon l'une quelconque des revendications 2 ou 3, la pièce d'assemblage (20) ne comprenant aucune vis pour l'assemblage avec le cadre (3, 4) du lit.

6. Lit selon l'une quelconque des revendications 2 ou 3, un moyen (32) susceptible d'être élastiquement précontraint étant prévu pour déplacer le support (30, 40) dans la position fermée et/ou pour le maintenir dans la position fermée.

7. Lit selon l'une quelconque des revendications 2 ou 3, le lit (1) comprenant au moins une tête de lit (5, 6) et de préférence une tête de lit (5, 6) sur chaque extrémité longitudinale, la tête de lit (5, 6) étant munie d'une pièce d'assemblage amovible, qui comporte au moins deux segments d'engagement en forme de crochets, destinés à s'engager dans le cadre de lit (3, 4) et notamment un support ouvrable étant prévu, qui dans une position fermée est aménagé pour empêcher un retrait de la tête (5, 6) du cadre de lit (3 ,4).

8. Lit selon l'une quelconque des revendications précédentes, pour la pièce rapportée (10) étant prévue une pièce d'assemblage (20) à triple sécurité, avec la première sécurité, la pièce rapportée (10) pouvant se fixer au lit par influence de la force de gravité, avec la deuxième sécurité, un support (30) par complémentarité de forme étant prévu, qui empêche un retrait de la pièce rapportée (10) à l'encontre de la direction de la force de gravité et avec la troisième sécurité, une sécurisation de la deuxième sécurité étant prévue et notamment la troisième sécurité comprenant un assemblage par complémentarité de force (32) et/ou de forme (33).

9. Procédé, destiné à fixer une pièce rapportée (10) sur un lit (1), lors duquel on accroche la pièce rapportée (10), en usant de la force de gravité sur un cadre (3, 4) du lit (1) et on la fixe sur le lit (1) avec un support (30, 40) actionnable manuellement, pour la pièce rapportée (10) étant prévues deux pièces d'assemblage (20), pour l'assemblage avec le cadre (3, 4) du lit (1) et chacune des pièces d'assemblage (20) comportant deux segments d'engagement (22, 23) en forme de crochets, destinés à s'engager dans et/ou à entourer le cadre (3, 4) et les segments d'engagement (22, 23) en forme de crochets présentant un décalage dans la direction verticale et dans la direction transversale du lit et pour chacune des pièces d'assemblage (20) étant prévu un support (30, 40) ouvrable, qui dans une position fermée, empêche un retrait de la pièce rapportée (10) du cadre de lit (3, 4) .
